Europäisches Patentamt

European Patent Office

Office européen des brevets

(11) Publication number: **0 036 227**
**A2**

(12) # EUROPEAN PATENT APPLICATION

(21) Application number: **81200212.9**

(22) Date of filing: **23.02.81**

(51) Int. Cl.³: **A 23 G 3/02**
**A 23 G 3/12**

(30) Priority: **29.02.80 BE 58433**

(43) Date of publication of application:
**23.09.81 Bulletin 81/38**

(84) Designated Contracting States:
**AT CH DE FR GB IT LI LU NL SE**

(71) Applicant: **PAKCRAFT LIMITED UNIT E1**
**Welland Valley Way Welland Valley Trading Estate**
**Market Harborough Leicestershire(GB)**

(72) Inventor: **Aquarius, Coenrardus Hubertus**
**Heilig Wammesstraat 24**
**B-3680 Maaseik(BE)**

(74) Representative: **Donné, Eddy**
**M.F.J.Bockstael Arenbergstraat 13**
**B-2000 Anvers(BE)**

(54) Lolly and machine for manufacturing such a lolly.

(57) Lolly comprising a little stick and an elongated piece of sugar-candy thereon, characterized in that the piece of sugar-candy (2) is provided, on its end removed from the stick (1), with a recess (3) having such shape and dimension that, when blowing on the end provided with the recess (3), in the same manner as on a Panpipe, a whistle is audible.

Fig. 1

1

"Lolly and machine for manufacturing such lollies"

This invention relates to a lolly comprising a little stick with an elongated piece of sugar-candy thereon.

The object of the invention is to provide such a lolly which not only may be eaten, but which can also give a whistle signal without making the manufacture of the lolly more difficult or without the sugar-candy being lost.

For this purpose, the pice of sugar-candy is provided, on its end removed from the stick, with a recess having such shape and dimension that, when blowing on the end provided with the recess, in the same manner as on a Panpipe, a whistle is audible.

The height of the whistle depends on the shape and dimension of the recess. Said recess may be formed when stamping, thereby requiring no additional operation. The sugar-candy is not at all cut off, thereby preventing any loss of said sugar-candy.

In a particular embodiment of the invention, the recess provided in the piece of sugar-candy is conically tapered outwardly.

In a practical embodiment of the invention, the lolly is provided with a notch on its external edge and near the end provided with the recess.

Said notch indicates where the lip must be located in order to obtain the most readily a whistle when blowing.

This invention relates also to a machine which is particularly adapted for the manufacture of lollies according to one of the previously mentioned embodiments.

Like the known machines for the manufacture of lollies, it comprises a number of dies, means for bringing a piece of sugar-candy in said dies and at least one moving punch per die for stamping the applied piece of sugar-candy into the desired shape.

For manufacturing lollies according one of the above-mentioned embodiments, the punch of every die is provided, on its end facing the inner adge of the die, with a pin forming a recess in the piece of sugar-candy.

In a preferred embodiment of the invention, every die comprises an inner body and a valve which may be moved away from said inner body.

Thus, the inner body is efficiently provided, on the inner edge of the die, with a projection forming the notch in the piece of sugar-candy.

Other features and advantages of the invention will be more apparent from the following description of a lolly and a machine for manufacturing such lollies according to the invention; this description is given only by way of example without limiting the invention; the reference numbers are those of the enclosed drawings.

Figure 1 is a side view of a lolly according the the invention;

Figure 2 is a cross-section taken on the line II-II
of Figure 1;

Figure 3 is a diagrammatic cross-section of a die of a
machine for the manufacture of the lolly as shown in
Figures 1 and 2;

In the various figures, the same references numbers relate to
the same elements.

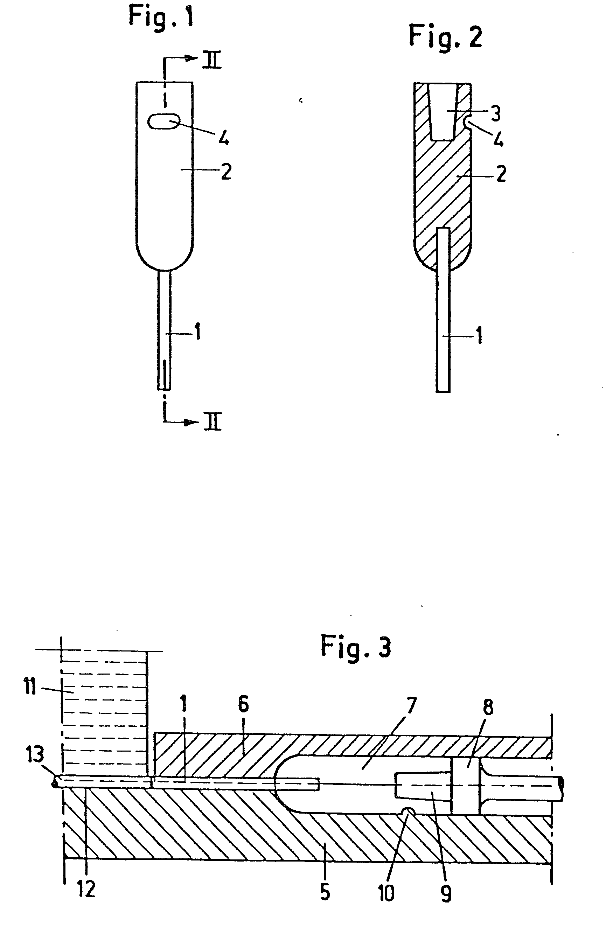

The lolly according to Figures 1 and 2 comprises substantially
a little stick 1 and an elongated piece of sugar-candy 2.

The piece of sugar-candy 2 is under the form of a cylinder one
end of which is rounded near the stock 1. In the opposite end,
is provided a round recess 3. Said recess 3 is slightly tapering outwardly with a conicity of 1 to 50, which means that,
on a distance of 50 length units, the diameter varies by one
length unit. The depth of the recess 3 is selected so that,
when blowing on the end provided with the recess 3 in the same
manner as on a Panpipe, a whistle is obtained. The tone height
of said whistle depends on the depth of the recess 3.

In order to readily apply the mouth in the correct position
for whistling, a notch 4 is provided in the outer face of the
piece of sugar-candy 2 near the end provided with the recess
3. The lower lip must be located in said notch.

When whistling, the end provided with the recess should not be
introduced in the mouth so that the sugar-candy has then
practically no tendency to melt.

The manufacture of the lolly is very simple. As well the
recess 3 as the notch 4 are formed during the stamping operation itself, this being possible owing to the fact that the
notch 4 does not reach into the recess 3. Accordingly, no
additional operation is necessary so that the lolly may be
also used as a whistle; in addition, considering that no sugar-candy must be cut off thereafter, said sugar-candy is not at all lost.

The lolly may be very readily manufactured with a machine which is only different from the existing machines by another construction of the dies and the punches. A machine particularly suitable for being converted with the view of manufacturing the lollies according to this application, is the machine described in the Belgian Patent No 867.059 of 12 May 1978 in the name of the Applicant.

Figure 3 shows diagrammatically a die and a punch associated thereto which are adapted for the manufacture of a lolly according to the application. The remainder of the machine is not modified and it will be described hereafter only to make this invention more apparent, if necessary.

As shown in Figure 3, each die comprises an inner body 5 and a valve 6. The inner bodies 5 of all the dies are mounted on rotating drum, whereas the valves 6 of all the dies are hingedly connected with each other into an endless chain contacting locally the drum. Thus, at the contact position, a valve 6 covers the inner body 5, thereby forming a closed box 7. A punch 8 slidingly mounted on the drum may be moved in said box 7. When rotating together with the drum, said punch 8 is reciprocated relative to the inner body 5 by means of stationary guiding cams.

Before the valve 6 contacts the inner body 5, a piece of sugar-candy is disposed in the cavity of the inner body 5 so that, when the valve 6 closes the inner body 5, thereby forming the closed box 7, a piece of sugar-candy is located in said box 7 between the punch 8 and the opposite end of the box 7 which is closed according to a round owing to the shape of the valve 6 and the inner body 5.

The machine for the manufacture of lollies according to the invention is characterized in that on face of the punch 8, which is oriented to the inner edge of the die, i.e. to the sugar-candy, is provided a pin 9 the form and dimension of which are corresponding to the form and dimension of the recess 3 which must be formed in the lolly.

Another characteristic lies in the fact that in the inner body 5 opposite to the location where the sugar-candy is situated after stamping with the punch, and near said punch 8, is provided a projection 10 the shape and dimension of which are corresponding to the notch 4 which must be formed in the lolly.

During the stamping operation, a little stick 1 is introduces as known in the piece of sugar-candy in the box 7. Together with the inner body 5, the drum comes at a determined location opposite to a stick drum 11 and it receives a stick 1 in a groove 12. Then said stick 1 is pushed into the sugar-candy by means of a punch 13 which may be reciprocated in the groove 12 in the same manner as the punch 8 in the box 7. Each die is provided with a punch 13 and a groove 12 which are situated in the drum.

Figure 3 shows the die in the position in which the lolly is just formed, i.e. in the position in which the punc 8 is advanced to the maximum in the closed die, the stick 1 being just introduced into the piece of sugar-candy 2 through the punch 13.

The drum being further rotated, the punches 8 and 13 are coming back to their starting positions and the valve 6 leaves the inner body 5. The lolly may be then removed from the box 7, e.g. by falling under gravity when the inner body 5 is located under the drum.

For manufacturing the lolly according to the invention, very few modifications are to be made to the existing machine. Only the punches 8 must be provided with a pin 9, whereas a projection 10 must be formed in the inner bodies 5. The operation itself of the machine is not at all modified. As well the notch 4 as the recess 3 are formed during the stamping operation itself, so that no additional operation is required therefor. More particularly, no sugar-candy is cut off or expelled thereby preventing any loss of sugar-candy.

The invention is not at all limited to the previously described embodiments and numerous modifications may be applied to the described embodiments within the scope of the patent application, namely as regards the shape, the constitution, the arrangment and the number of the elements used for carrying our the invention.

More particularly, the lolly must not be necesssarily cylindrical. It may also jave an oval cross-section or even an angular cross-section.

It is apparent that the expression "stick" must be taken in the broad meaning so that it is not necessarily question of a wooden stick, but also of a stick made of plastic material or paper.

The machine must not be necessarily of the type as described in the Belgian Patent No 967.059. Other known lolly machines may be also used, it being understood that, as far as a notch 4 in the lolly is desired, a machine with valves is required. Said notch may be also omitted, it being then also possible to use a machine without valves for making lollies, provided that the punches comprise a pin.

The lolly may also essentially be provided on its sugar-candy with a decoration, e.g. under the form of a relief.

Claims.

1.- Lolly comprising a little stick and an elongated piece of sugar-candy thereon, characterized in that the piece of sugar-candy (2) is provided, on its end removed form the stick (1), with a recess (3) having such shape and dimension that, when blowing on the end provided with the recess (3), in the same manner as on a Panpipe, a whistle is audible.

2.- Lolly according to the preceeding claim, characterized in that the recess (3) provided in the piece of sugar-candy (2) is conically tapered outwardly.

3.- Lolly according to the preceeding claim, characterized in that the conicity of the recess (3) is 1 to 50.

4.- Lolly according to one of the preceeding claims characterized in that it is provided with a notch (4) on its external edge and rear the end provided with the recess (3).

5.- Lolly according to one of the preceeding claims, characterized in that its piece of sugar-candy (2) is cylindrical and is rounded at the side of the stick (1).

6.- Machine for the manufacture of lollies, according to one of the preceeding claims, which comprises a number of dies, means for bringing a piece of sugar-candy (2) in said die and at least one moving punch (8) per die for stamping the applied piece of sugar-candy into the desired shape, characterized in that the punch (8) of every die is provided, on its end facing the inner edge of the die, with a pin (9) forming a recess (3) in the piece of sugar-candy (2).

7.- Machine according to the preceeding claim, cha racterized in that every die comprises an inner body (5) and a valve (6) which may be moved away from said inner body (5).

8.- Machine according to the preceeding claim, characterized in that the inner body (5) is provided, on the inner edge of the die, with a projection (10) forming the notch (4) in the piece of sugar-candy (2).

9.- Machine according to one of claims 7 and 8, characterized in that said machine is of the type in which the inner bodies (5) of all the dies are mounted on a rotating drum and the valves (6) of the dies are hingedly connected to each other into an endless chain locally contacting the drum.

0036227

1/1

Fig. 1

Fig. 2

Fig. 3